# FASCICULE DE BREVET EUROPEEN

(11) **EP 3 809 382 B1**
(45) Date de publication et mention de la délivrance du brevet: **16.07.2025**
(21) Numéro de dépôt: 20201827.1
(22) Date de dépôt: 14.10.2020
(51) Int. Cl.: G08B 13/196, G08B 21/24

(54) **DISPOSITIF ÉLECTRONIQUE ET PROCÉDÉ DE GÉNÉRATION D'UN SIGNAL D'ALERTE, SYSTÈME DE TRANSPORT ET PROGRAMME D'ORDINATEUR ASSOCIÉS**
ELEKTRONISCHE VORRICHTUNG UND VERFAHREN ZUR ERZEUGUNG EINES ALARMSIGNALS, ENTSPRECHENDES TRANSPORTSYSTEM UND COMPUTERPROGRAMM
ELECTRONIC DEVICE AND METHOD FOR GENERATING A WARNING SIGNAL, ASSOCIATED TRANSPORT SYSTEM AND COMPUTER PROGRAM

(30) Priorité: 15.10.2019 FR 1911471
(43) Date de publication de la demande: 21.04.2021
(73) Titulaire: TRANSDEV GROUP INNOVATION, 92130 Issy-les-Moulineaux (FR)
(72) Inventeur: DARNAUD, Thomas, 78000 VERSAILLES (FR); KARAOGUZ, Cem, 78280 Guyancourt (FR)
(74) Mandataire: Lavoix

(56) Documents cités:
- EP-A1- 3 499 473
- DE-A1- 102014 219 692
- US-A1- 2018 197 027
- US-A1- 2019 061 619

## Description

La présente invention concerne un dispositif électronique de génération d'un signal d'alerte, le dispositif étant apte à être embarqué dans un véhicule automobile, notamment un véhicule autonome.

L'invention concerne également un système de transport comprenant un ensemble de véhicules, un ensemble de stations d'arrêt et une plateforme externe de supervision.

L'invention concerne également un procédé de génération d'un signal d'alerte dans un véhicule, notamment un véhicule autonome, le procédé étant mis en œuvre par un tel dispositif.

L'invention concerne aussi un programme d'ordinateur comportant des instructions logicielles qui, lorsqu'elles sont exécutées par un ordinateur, mettent en œuvre un tel procédé de génération.

L'invention concerne le domaine des véhicules automobiles autonomes, en particulier des véhicules automobiles autonomes ayant un niveau d'automatisation (de l'anglais *level of automation*) supérieur ou égal à 3 selon le barème de l'Organisation Internationale des Constructeurs Automobiles (OICA).

En particulier, l'invention concerne le domaine des transports en commun, le véhicule étant notamment un autobus.

De manière connue, lorsque l'autobus est conduit au moins partiellement par un conducteur, ce dernier peut réagir en cas d'évènements se déroulant dans l'autobus. Par exemple, si un usager de l'autobus fume à l'intérieur de l'autobus, le conducteur va demander à cet usager d'éteindre sa cigarette. A titre d'autre exemple, en cas d'agression d'un usager par un autre usager, le conducteur appelle les forces de maintien de l'ordre afin qu'elles interviennent dans l'autobus.

Toutefois, le traitement de ces évènements se déroulant dans le véhicule peut encore être amélioré, notamment en l'absence de conducteur.

On connait en outre des documents US 2019/061619 A1, DE 10 2014 219692 A1 et EP 3 499 473 A1 des dispositifs de génération de signaux d'alerte dans un véhicule autonome ou dans un véhicule ferroviaire.

Le but de l'invention est alors de proposer un dispositif électronique de génération permettant d'améliorer encore le traitement de tels évènements se déroulant dans le véhicule.

A cet effet, l'invention a pour objet un dispositif électronique de génération d'un signal d'alerte selon la revendication 1.

Ainsi, avec le dispositif électronique de génération selon l'invention, le module d'identification permet d'identifier au moins deux informations de deux catégories différentes dans le véhicule, puis le module de détection permet de détecter un évènement à partir de ces au moins deux informations et d'une règle d'alerte. Le module génération permet de générer un signal d'alerte en cas de détection d'un évènement.

Le dispositif électronique de génération selon l'invention permet ainsi de générer un signal d'alerte pertinent à destination des usagers du véhicule et/ou à une plateforme externe de supervision. En particulier, la prise en compte des au moins deux informations et de la règle d'alerte permet une détection précise de l'évènement, notamment en cas d'acte(s) d'incivilité. Ceci est particulièrement avantageux lorsque le véhicule est un véhicule autonome en raison de l'absence de conducteur pouvant communiquer avec les usagers ou avec l'extérieur du véhicule.

Suivant d'autres aspects avantageux de l'invention, le dispositif électronique de génération comprend une ou plusieurs des caractéristiques selon les revendications 2 à 9.

L'invention a également pour objet un véhicule autonome définissant un volume intérieur configuré pour recevoir un ensemble d'usagers, le véhicule comprenant un tel dispositif électronique de génération et au moins un capteur d'images(s) embarqué relié au dispositif électronique de génération, le dispositif électronique de génération étant tel que défini ci-dessus.

L'invention a également pour objet un système de transport selon la revendication 10.

L'invention a également pour objet un procédé de génération d'un signal d'alerte dans un véhicule selon la revendication 11.

L'invention a également pour objet un programme d'ordinateur comportant des instructions logicielles qui, lorsqu'elles sont exécutées par un ordinateur, mettent en œuvre un procédé de génération tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
[Fig 1] la figure 1 une représentation schématique d'un système de transport selon l'invention ;
[Fig 2] la figure 2 est une vue en coupe verticale longitudinale d'un véhicule selon l'invention du système de transport de la figure 1 ;
[Fig 3] la figure 3 est une représentation schématique d'un dispositif électronique de génération embarqué à bord du véhicule de la figure 2 ; et
[Fig 4] la figure 4 est une représentation schématique d'un deuxième dispositif électronique de génération disposé dans une station d'arrêt du système de transport de la figure 1 ; et
[Fig 5] la figure 5 est un organigramme d'un procédé, selon l'invention, de génération d'un signal d'alerte dans le véhicule de la figure 2.

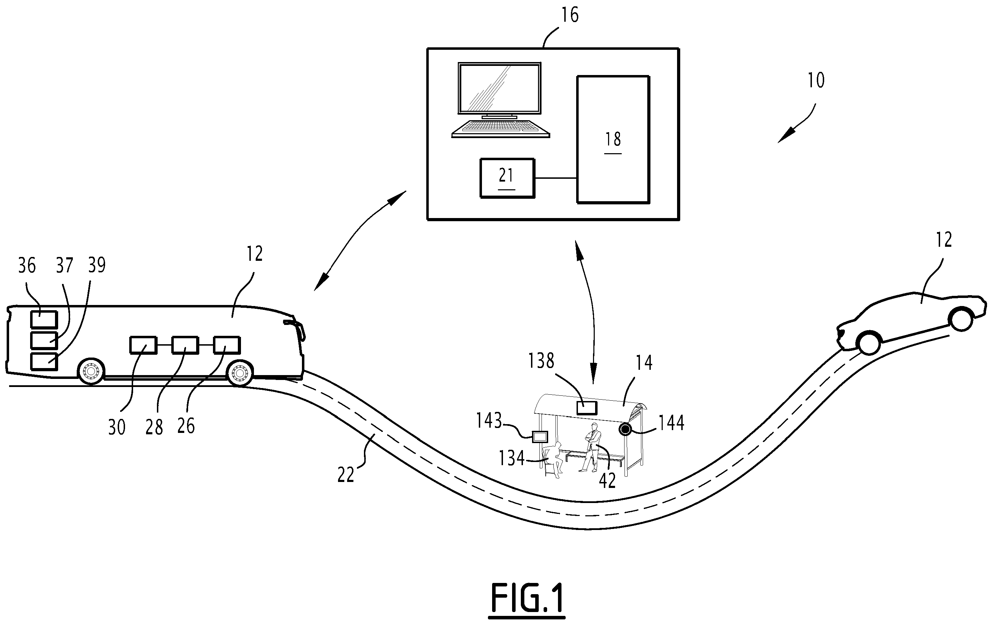

Un système de transport 10 est représenté sur la figure 1. Le système de transport 10 comprend un ensemble de véhicules 12, un ensemble de stations d'arrêt 14, une plateforme externe 16 de supervision desdits véhicules 12 et desdites stations d'arrêt 14.

La plateforme externe de supervision 16 est configurée pour surveiller ledit ensemble de véhicules 12 et ledit ensemble de stations d'arrêt 14.

A cet effet, la plateforme externe de supervision 16 comprend un dispositif électronique 18 de surveillance des véhicules 12 et des stations d'arrêt 14. En complément, la plateforme externe de supervision 16 comprend un écran d'affichage 20 et des moyens d'entrée/sortie 21, tels qu'un clavier et une souris, chacun étant relié au dispositif électronique de surveillance 18.

Chaque véhicule 12 est par exemple un véhicule automobile, en particulier un autobus, configuré pour se déplacer sur une voie de circulation 22.

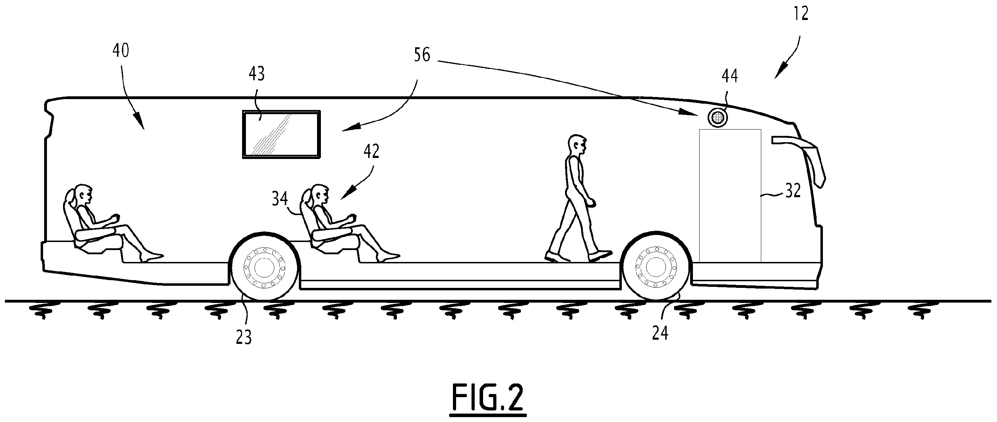

Comme visible sur les figures 1 et 2, chaque véhicule 12 comprend, de manière connue, des roues arrière 23, des roues avant 24, un moteur 26 relié mécaniquement via une chaîne de transmission (non représentée) aux roues arrière 23 et/ou avant 24 pour l'entraînement desdites roues 23, 24 en rotation autour de leur axe, un système de direction (non représenté), adapté pour agir sur les roues 23 et/ou 24 du véhicule 12 de manière à modifier l'orientation de sa trajectoire, et un système de freinage (non représenté), adapté pour exercer une force de freinage sur les roues 23, 24 du véhicule 12.

Chaque véhicule automobile 12 est typiquement constitué par un véhicule à traction et/ou propulsion électrique. A cet effet, le moteur 26 est constitué par un moteur électrique, et le véhicule 12 comprend une batterie électrique (non représentée) raccordée électriquement au moteur 26 pour l'alimentation du moteur 26 en électricité.

Chaque véhicule automobile 12 est par exemple un véhicule autonome. A cet effet, le véhicule automobile 12 comprend un dispositif électronique de conduite autonome 28 adapté pour piloter le véhicule de manière autonome en recevant des informations sur l'environnement du véhicule 12 par l'intermédiaire d'au moins un capteur 30, également appelé capteur d'environnement, et en agissant sur le moteur 26, le système de direction et le système de freinage, de manière à modifier la vitesse, l'accélération et la trajectoire du véhicule 12 en réaction aux informations reçues. Chaque capteur d'environnement 30 est par exemple une caméra, un capteur de température, un capteur de pression, un capteur d'humidité ou un lidar.

Chaque véhicule automobile autonome 12 présente de préférence un niveau d'automatisation supérieur ou égal à 3 selon le barème de l'Organisation Internationale des Constructeurs Automobiles (OICA). Le niveau d'automatisation est alors égal à 3, c'est-à-dire une automatisation conditionnelle (de l'anglais *Conditional Automation*), ou égal à 4, c'est-à-dire une automatisation élevée (de l'anglais *High Automation*), ou encore égal à 5, c'est-à-dire une automatisation complète (de l'anglais *Full Automation*).

Selon le barème de l'OICA, le niveau 3 d'automatisation conditionnelle correspond à un niveau pour lequel le conducteur n'a pas besoin de surveiller en permanence la conduite dynamique, ni l'environnement de conduite, tout en devant toujours être en mesure de reprendre le contrôle du véhicule automobile autonome 12. Selon ce niveau 3, un système de gestion de la conduite autonome, embarqué à bord du véhicule automobile autonome 12, effectue alors la conduite longitudinale et latérale dans un cas d'utilisation défini et est apte à reconnaître ses limites de performance pour demander alors au conducteur de reprendre la conduite dynamique avec une marge de temps suffisante.

Le niveau 4 d'automatisation élevée correspond à un niveau pour lequel le conducteur n'est pas requis dans un cas d'utilisation défini. Selon ce niveau 4, le système de gestion de la conduite autonome, embarquée à bord du véhicule automobile autonome 12, exécute alors la conduite dynamique latérale et longitudinale dans toutes les situations de ce cas d'utilisation défini.

Le niveau 5 d'automatisation complète correspond enfin à un niveau pour lequel le système de gestion de la conduite autonome, embarqué à bord du véhicule automobile autonome 12, effectue la conduite dynamique latérale et longitudinale dans toutes les situations rencontrées par le véhicule automobile autonome 12, pendant tout son trajet. Aucun conducteur n'est alors requis.

Comme visible sur la figure 2, le véhicule 12 comprend, en outre, avantageusement au moins une porte 32, au moins une place 34, au moins un capteur d'image 36, avantageusement un capteur additionnel 37 et un dispositif électronique de génération 38 d'un signal à l'intérieur du véhicule 12.

Le véhicule 12 présente un volume intérieur 40 configuré pour recevoir un ensemble d'usagers 42, et avantageusement des marchandises à transporter.

Par « usager », on entend un passager situé dans le volume intérieur 40 du véhicule, une personne située à l'extérieur du véhicule 12 attendant de pouvoir embarquer à bord du véhicule ou une personne située à l'extérieur du véhicule 12 ayant voyagé à bord du véhicule 12.

Le véhicule 12 comprend en outre avantageusement au moins un écran d'affichage 43 et au moins un haut-parleur 44.

L'écran d'affichage 43 et le haut-parleur 44 sont avantageusement disposés dans le volume intérieur 40. En variante ou en complément, l'écran d'affichage 43 et le haut-parleur 44 sont disposés sur une paroi externe du véhicule.

Chaque écran 43 et chaque haut-parleur 44 sont propres à communiquer au moins une information au(x) usager(s) 42 présent(s) dans le véhicule 12 ou à l'extérieur de celui-ci.

Le volume intérieur 40 communique avec l'extérieur du véhicule 12 au moins par la porte 32. La porte 32 est configurée pour permettre aux usagers 42 et/ou marchandises de passer de l'extérieur à l'intérieur du volume intérieur 40, et inversement. Le volume intérieur 40 est notamment délimité par un plancher, sur lequel évoluent les usagers 42 et les marchandises à l'intérieur du volume intérieur 40. La porte 32 est en particulier une porte latérale définissant une ouverture transversale s'étendant verticalement depuis le plancher.

Chaque place 34 est propre à recevoir l'un des usagers 42. Autrement dit, chaque place 34 est un emplacement pour un usager 42 respectif. La place 34 est en particulier une place assise comme par exemple un siège ou une banquette, ou une place debout comme par exemple une poignée.

Chaque capteur d'image(s) 36 est configuré pour fournir au moins une image de l'intérieur et/ou de l'extérieur du véhicule 12.

Le véhicule 12 comprend avantageusement une pluralité de capteurs d'image(s) 36.

Chaque capteur additionnel 37 est propre à fournir au moins une donnée relative à l'intérieur et/ou de l'extérieur du véhicule 12. Chaque capteur additionnel 37 est choisi parmi le groupe consistant en : un capteur de présence, un capteur sonore, un capteur infrarouge, un capteur de poids et un capteur de température.

Chaque capteur 36, 37 est relié au dispositif électronique de génération 38.

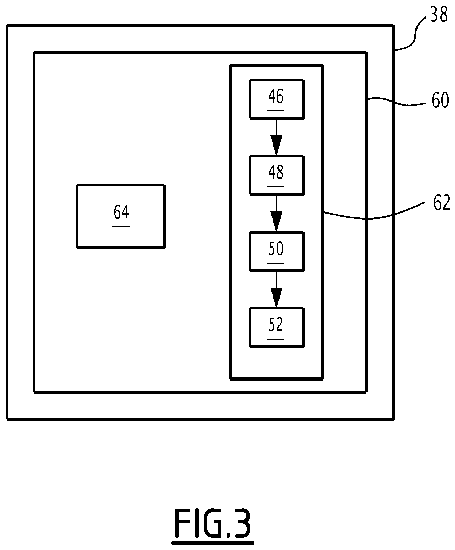

Comme visible sur la figure 3, le dispositif de génération 38 comprend un module d'identification 46, un module de détection 48, un module de génération 50 et avantageusement un module de traitement 52.

Le module d'identification 46 est configuré pour identifier au moins deux informations de deux catégories différentes à partir d'au moins une image issue du ou des capteur(s) d'image(s) 36.

Chaque catégorie est choisie parmi le groupe consistant en :
- une présence d'un animal ou d'un objet interdit et/ou abandonné par l'un des usagers 42 ;
- un mouvement ou une posture caractéristique de l'un des usagers 42 ; et
- une présence d'un élément d'ameublement du véhicule 12.

L'animal est par exemple un chien accompagnant, ou non, l'un des usagers 42.

L'objet interdit est choisi parmi le groupe consistant en : une arme ; une cigarette en papier ; une cigarette électronique ; une pipe ; un briquet ; une enceinte portable ; un ciseau ; un cutter ; un feutre ; une bombe de peinture ; un vélo ; un aliment ; une poussette ; un colis et un bagage présentant une dimension maximale supérieure à un seuil prédéterminé.

La dimension maximale est par exemple supérieure à 50 cm.

L'homme du métier comprendra que par « objet interdit », on entend tout objet pouvant importuner les usagers 42 du véhicule 12 durant leur trajet ou pouvant dégrader le véhicule 12.

Le mouvement ou la posture caractéristique de l'un des usagers 42 est choisi parmi le groupe consistant en :
- une extension d'un bras de l'usager 42 pendant un intervalle de temps inférieur à une durée seuil prédéterminée ;
- un mouvement répété de la main de l'usager 42 vers la bouche dudit usager 42 ;
- un mouvement de la main de l'usager 42 vers un élément d'ameublement 56 du véhicule 12 ;
- un mouvement de la main de l'usager 42 vers un autre usager 42 ;
- une position assise avec une jambe tendue de l'usager 42 ; et
- un poing fermé de l'usager 42.

La durée seuil est par exemple inférieure à 1 seconde.

L'élément d'ameublement 56 du véhicule est choisi parmi le groupe consistant en : la porte 32 ; un siège; une vitre ; l'écran d'affichage 43 ; le haut-parleur 44 ; une caméra ; un diffuseur de climatisation ; une poignée ou une barre de maintien ; un valideur de ticket de transport ; un interphone ; une poignée de déverrouillage des portes 32 du véhicule 12 ; un bouton d'arrêt d'urgence ; un matériel de soins d'urgence ; un marquage au sol du véhicule et un port USB informatique.

Dans un mode de réalisation avantageux, le module d'identification 46 est configuré pour identifier chaque information par un traitement d'image(s) issue(s) du capteur d'image(s) associé à une méthode d'apprentissage automatique (de l'anglais machine learning).

La méthode d'apprentissage automatique se base, par exemple, sur un modèle utilisant une approche statistique, afin de permettre d'améliorer les performances de cette méthode à résoudre des tâches, sans être explicitement programmé pour chacune de ces tâches. L'apprentissage automatique comporte deux phases. La première phase consiste à définir un modèle à partir de données présentes dans une base de données, appelées observations. L'estimation du modèle consiste en particulier à reconnaître la présence d'un ou plusieurs objets dans une image. Cette phase dite d'apprentissage est généralement réalisée préalablement à l'utilisation pratique du modèle. La seconde phase correspond à l'utilisation du modèle : le modèle étant défini, de nouvelles images sont alors soumises au modèle, afin d'obtenir le ou les objets détectés sur lesdites images.

Le modèle d'apprentissage automatique comporte par exemple la mise en œuvre d'un réseau de neurones. Un réseau de neurones est en général composé d'une succession de couches, dont chacune prend ses entrées sur les sorties de la précédente. Chaque couche est composée d'une pluralité de neurones, prenant leurs entrées sur les neurones de la couche précédente. À chaque synapse entre neurones est associé un poids synaptique, de sorte que les entrées reçues par un neurone sont multipliées par ce poids, puis additionnées par ledit neurone. Le réseau de neurones est optimisé grâce aux ajustements des différents poids synaptiques pendant la phase d'apprentissage en fonction des images présentes dans la base de données initiale.

Dans un mode de réalisation avantageux, le module d'identification 46 est configuré pour attribuer un niveau de fiabilité à chaque information identifiée. Avantageusement, le module d'identification 46 est configuré pour considérer l'information uniquement si le niveau de fiabilité est supérieur à un seuil prédéterminé.

Le niveau de fiabilité est par exemple déterminé en fonction de la fiabilité du capteur 36, 37 associé et/ou en fonction de la fiabilité du modèle d'apprentissage automatique utilisé.

La fiabilité d'un capteur 36, 37 est par exemple déterminée par la mesure d'une marge d'erreur sur les mesures effectuées par ledit capteur 36, 37.

La fiabilité du modèle d'identification est par exemple déterminée à partir d'un taux de réussite de détection de l'information à partir de la base de données d'images.

Le module de détection 48 est configuré pour détecter un évènement à partir de la combinaison desdites au moins deux informations de deux catégories différentes identifiées par le module d'identification 46 et à partir d'une règle d'alerte associant lesdites au moins deux informations audit évènement.

En particulier, l'évènement détecté est une incivilité commise par un usager 42 de nature à gêner la tranquillité et/ou le confort des autres usagers 42 du véhicule 12, ou encore de nature à dégrader le véhicule 12.

A titre d'exemple, l'évènement détecté est choisi parmi le groupe consistant en :
- une dégradation du véhicule 12 commise par l'un des usagers 42 ;
- une atteinte à la propreté du véhicule 12 commise par l'un des usagers 42 ;
- la consommation de nourriture ou d'alcool par l'un des usagers 42 dans le véhicule 12 ;
- une présence dans le véhicule 12 de l'un des usagers 42 en train de fumer ;
- une atteinte au confort sonore des usagers 42 ;
- un comportement menaçant physiquement et/ou verbalement de l'un des usagers 42 envers au moins l'un des autres usagers 42 ;
- une présence d'une arme dans le volume intérieur 40 ;
- une présence d'un objet volumineux et encombrant dans le volume intérieur 40 ;
- une présence d'un animal dans le volume intérieur 40 ;
- un empêchement par l'un des usagers 42 de fermer la porte 32 ;
- la présence d'un colis oublié et/ou piégé dans le volume intérieur 40 ;
- une blessure de l'un des usagers 42 ; et
- le malaise et/ou la chute de l'un des usagers 42.

La règle d'alerte est une règle prédéfinie permettant d'associer les informations identifiées par le module d'identification 46 et l'évènement détecté par le module de détection 48.

En particulier, pour deux informations relatives à la présence d'un objet interdit et au mouvement de l'un des usagers 42, la règle d'alerte est propre à associer lesdites au moins deux informations pour la détection d'un évènement respectif si l'usager 42 est en possession de l'objet interdit et si le mouvement de l'usager 42 comporte un déplacement de l'objet interdit.

A titre d'exemple, l'une des règles d'alerte associe l'identification d'une cigarette dans la main de l'un des usagers 42 et l'identification du mouvement répété de la main dudit usager en direction de sa bouche avec l'évènement selon lequel il y a la présence dans le véhicule 12 d'un usager 42 en train de fumer.

A titre d'autre exemple, l'une des règles d'alerte associe l'identification d'un couteau dans la main de l'un des usagers 42 et l'identification du mouvement de la main de l'usager 42 vers un autre usager 42 avec l'évènement selon lequel il y a un comportement menaçant physiquement et/ou verbalement de l'un des usagers 42 envers au moins l'un des autres usagers 42 dans le véhicule 12.

Encore à titre d'autre exemple, l'une des règles d'alerte associe l'identification d'un déchet dans la main de l'un des usagers 42 et l'identification d'une extension d'un bras de l'usager pendant un intervalle de temps inférieur à la durée seuil prédéterminée avec l'évènement selon lequel il y a une dégradation du véhicule 12 commise par l'un des usagers 42 et en particulier un jet du déchet par l'usager 42 dans le véhicule 12.

En variante ou en complément, pour deux informations relatives à la présence d'un objet interdit ou d'un animal et à la présence d'un élément d'ameublement du véhicule, la règle d'alerte est propre à associer lesdits au moins deux informations pour la détection d'un évènement respectif si l'objet interdit ou l'animal et l'élément d'ameublement sont éloignés d'une distance inférieure à une distance seuil prédéterminée.

La distance seuil prédéterminée est par exemple inférieure à 10 cm.

A titre d'exemple, l'une des règles d'alerte associe l'identification de l'une des portes 32 et l'identification d'un bagage présentant une dimension maximale supérieure au seuil prédéterminé et situé à une distance inférieure à la distance seuil prédéterminée de ladite porte 32 avec l'évènement selon lequel il y a la présence d'un objet volumineux et encombrant dans le volume interne 40 gênant l'entrée ou la sortie du véhicule 12.

A titre d'autre exemple, l'une des règles d'alerte associe l'identification de l'un des écrans d'affichage 43 et l'identification d'une bombe de peinture située à une distance inférieure à la distance seuil prédéterminée dudit écran 43 avec l'évènement selon lequel il y a une dégradation du véhicule 12 commise par l'un des usagers 42 et en particulier une dégradation de l'écran 43 par de la peinture.

Encore à titre d'autre exemple, l'une des règles d'alerte associe l'identification de l'un des sièges et l'identification de nourriture disposée sur ledit siège avec l'évènement selon lequel il y a la consommation de nourriture par l'un des usagers 42 dans le véhicule 12.

Encore à titre d'autre exemple, l'une des règles d'alerte associe l'identification de l'un des sièges et l'identification d'un cutter ou d'un stylo disposé sur ledit siège avec l'évènement selon lequel il y a une détérioration du siège au moyen du cutter ou du stylo par l'un des usagers 42.

En variante ou en complément, pour deux informations relatives au mouvement ou à la posture caractéristique de l'un des usagers 42 et la présence d'un élément d'ameublement 56 du véhicule 12, la règle d'alerte est propre à associer les au moins deux informations pour la détection d'un évènement respectif si l'usager est en contact avec l'élément d'ameublement.

A titre d'exemple, l'une des règles d'alerte associe l'identification d'une position assise avec une jambe tendue de l'usager 42 et l'identification de l'un des sièges en contact avec le pied de l'usager avec l'évènement selon lequel il y a une atteinte à la propreté du véhicule 12 commise par l'un des usagers 42 et en particulier la présence d'un usager 42 posant ses pieds sur le siège.

A titre d'autre exemple, l'une des règles d'alerte associe l'identification de l'une des portes 32 et l'identification d'un mouvement de la main de l'un des usagers 42 vers la porte 32 avec l'évènement selon lequel l'usager 42 empêche la fermeture des portes 32.

Encore à titre d'exemple, l'une des règles d'alerte associe l'identification d'une vitre ou d'un écran du véhicule 12 et l'identification d'un mouvement de la main de l'un des usagers 42 vers la vitre ou l'écran avec l'évènement selon lequel l'usager 42 frappe la vitre ou l'écran.

Dans un mode de réalisation avantageux, le module de détection 48 est configuré pour détecter un évènement à partir de la combinaison d'au moins une information de chacune des trois catégories différentes et à partir d'une règle d'alerte associant lesdites au moins trois informations audit évènement.

A titre d'exemple, l'une des règles d'alerte associe l'identification d'un feutre dans la main de l'un des usagers 42, l'identification d'un mouvement répété de ladite main de l'usager 42 et l'identification d'une vitre ou paroi du véhicule située à une distance du feutre inférieure à la distance seuil prédéterminée avec l'évènement selon lequel il y a une dégradation du véhicule 12 commise par l'usager 42 et en particulier la présence d'un usager 42 marquant la vitre ou paroi au feutre.

En variante ou en complément, le module de détection 48 est configuré pour détecter un évènement uniquement lorsqu'au moins deux règles d'alerte ont associé au moins deux informations à un même évènement.

En complément encore, le module de détection 48 est configuré pour détecter chaque évènement à partir d'une unique image issue du capteur d'image(s) 36 et en outre à partir d'au moins une suite d'images issue du capteur d'image(s) 36 pendant une période temporelle prédéterminée correspondant à l'évènement.

A titre d'exemple, le module de détection 48 est configuré pour détecter la présence d'un fumeur à bord du véhicule 12 en cas d'identification d'une cigarette sur une unique image et en cas d'identification du mouvement de la main de l'usager 42 vers la bouche sur une succession d'images correspondant à une période temporelle d'environ 3 secondes.

A titre d'autre exemple, le module de détection 46 est configuré pour détecter une dégradation de l'un des sièges par un usager 42 en cas d'identification d'un cutter ou d'un ciseau sur une unique image et en cas d'identification du mouvement répété de la main de l'usager 42 vers le siège sur une succession d'images correspondant à une période temporelle d'environ 10 secondes.

En variante ou en complément, le module de détection 48 est configuré pour détecter chaque évènement à partir d'au moins une image issue du capteur d'image(s) 36 et à partir d'au moins une donnée issue d'un capteur additionnel 37.

En particulier, le module de détection 48 est configuré pour détecter l'évènement en outre à partir d'une donnée sonore issue d'un capteur sonore embarqué à bord du véhicule 12.

A titre d'exemple, le module de détection 48 est configuré pour détecter une agression d'un usager 42 par un autre usager 42 en cas d'identification d'une arme sur une image et en cas d'identification d'une expression caractéristique telle que « A l'aide » ou « S.O.S. » dans la donnée sonore.

En variante ou en complément, le module de détection 48 est en outre configuré, lorsque le véhicule 12 est à l'arrêt au niveau d'une station d'arrêt 14, pour détecter un évènement à l'extérieur du véhicule 12 à partir de la combinaison d'au moins deux informations de deux catégories différentes parmi lesdites catégories et à partir d'une règle d'alerte associant lesdites au moins deux informations audit évènement.

A titre d'exemple, à partir de l'identification de l'une des roues 23, 24 et l'identification d'un couteau ou cutter en contact avec ladite roue 23, 24, le module de détection 48 est configuré pour détecter une dégradation du véhicule 12, et en particulier la présence d'un individu essayant de crever le pneu de la roue 23, 24 du véhicule 12.

Le module de génération 50 est configuré pour générer au moins un signal d'alerte en cas de détection d'un évènement par le module de détection 48. Le module de génération 50 est en outre configuré pour envoyer le signal d'alerte au module de traitement 52.

Le module de génération 50 est configuré pour calculer un niveau de probabilité de détection de l'évènement.

Le niveau de probabilité traduit la probabilité que ledit évènement détecté se déroule véritablement dans le véhicule 12. Par exemple, un niveau de probabilité de 100 % indique que l'évènement a lieu de manière certaine.

Le niveau de probabilité est déterminé par exemple en fonction du niveau de fiabilité de chaque information utilisée pour la détection de l'évènement.

Le niveau de probabilité est également déterminé à partir de la fiabilité de la règle d'alerte associée. La fiabilité de la règle d'alerte est par exemple déterminée à partir d'un taux de réussite de détection de l'évènement à partir d'une base de données d'informations.

En complément, le module de génération 50 est en outre configuré pour attribuer un niveau de criticité prédéterminé associé à l'évènement.

Le niveau de criticité de chaque évènement est par exemple déterminé par le type d'évènement détecté et par la gravité de l'évènement détecté. En particulier, plus un évènement est susceptible d'affecter la sécurité des usagers 42 du véhicule 12, plus le module de génération 50 attribue à cet évènement un niveau de criticité élevé. Par exemple, la détection d'une agression d'un usager 42 présente une criticité supérieure à la détection d'un jet de détritus dans le véhicule 12.

Le module de traitement 52 est configuré pour recevoir le signal d'alerte généré par le module de génération 50.

En fonction du signal d'alerte, le module de traitement 52 est configuré pour envoyer une requête d'assistance à la plateforme externe de supervision 16.

La requête d'assistance comprend avantageusement les images associées à l'évènement, afin que l'opérateur puisse les afficher sur l'écran d'affichage 20 de la plateforme externe 16 et prendre une décision.

En particulier, le module de traitement 52 est propre à recevoir de la part de la plateforme externe 16 de supervision du véhicule 12 une instruction choisie parmi le groupe consistant en :
- une instruction d'envoi du signal d'alerte à un organisme en charge du maintien de l'ordre ;
- une instruction d'envoi du signal d'alerte sous forme de signal sonore au haut-parleur 44 situé dans le volume intérieur 40 ou sur une paroi externe du véhicule 12 ;
- une instruction d'envoi du signal d'alerte sous forme de signal visuel à l'écran d'affichage 43 situé dans le volume intérieur 40 ou sur la paroi externe du véhicule 12 ;
- une instruction d'envoi du signal d'alerte sous forme de signal d'arrêt d'urgence au système de freinage du véhicule 12 ;
- une instruction de verrouillage des portes 32 ;
- une instruction de variation de vitesse du véhicule 12 au dispositif électronique de conduite autonome 28 ; et
- une instruction de déplacement selon un nouveau trajet au dispositif électronique de conduite autonome 28.

En complément ou en variante, le module de traitement 52 est configuré pour envoyer, en fonction du signal d'alerte, une commande choisie parmi le groupe consistant en :
- une commande sonore au haut-parleur 44 situé dans le volume intérieur 40 ou sur la paroi externe du véhicule 12 ;
- une commande visuelle à l'écran d'affichage 43 situé dans le volume intérieur 40 ou sur une paroi externe du véhicule 12 ;
- une commande d'arrêt d'urgence au système de freinage du véhicule 12 ;
- une commande de verrouillage des portes 32 ;
- une commande de déplacement du véhicule selon un nouveau trajet au dispositif électronique de conduite autonome 28 ;
- une commande de variation de vitesse du véhicule 12 au dispositif électronique de conduite autonome 28 ; et
- une commande d'envoi du signal d'alerte à un organisme en charge du maintien de l'ordre.

Le module de traitement 52 est configuré pour envoyer la commande ou la requête d'assistance en fonction du niveau de probabilité de détection de l'évènement calculé par le module de génération Avantageusement, en fonction aussi du niveau de criticité prédéterminé associé à l'évènement attribué par le module de génération 50.

En particulier, le module de traitement 52 est configuré pour envoyer la requête à la plateforme externe 16 lorsque le niveau de probabilité de détection est inférieur à une probabilité seuil, afin de permettre alors à l'opérateur de confirmer la réalité de l'évènement avant de prendre une décision.

La probabilité seuil est par exemple inférieur à 75 %.

En outre, le module de traitement 52 est configuré pour envoyer la requête à la plateforme externe 16, lorsque le niveau de criticité est supérieur à une criticité seuil afin de permettre à l'opérateur de pouvoir agir au mieux à l'évènement et limiter les conséquences pour les usagers 42.

A titre d'exemple, en cas de détection d'un usager 42 posant un pied sur l'un des sièges, le module de traitement 52 est configuré pour envoyer directement la commande sonore au haut-parleur 44 situé à côté dudit usager 42 lui demandant d'enlever son pied du siège.

A l'inverse, en cas de détection d'un comportement menaçant physiquement et/ou verbalement par l'un des usagers 42, le module de traitement 52 est configuré pour envoyer préférentiellement une requête d'assistance à la plateforme externe de supervision 16, afin de pouvoir diffuser un message adéquat ou prévenir les forces de l'ordre si besoin.

Encore en exemple, en cas de détection de consommation d'alcool par l'un des usagers 42 dans le véhicule 12, le module de traitement 52 est configuré pour envoyer la commande sonore au haut-parleur 44 situé à côté dudit usager 42 lui demandant d'arrêter sa consommation et également pour envoyer une requête d'assistance à la plateforme externe 16 afin de pouvoir vérifier l'état d'ébriété de l'usager 42 et agir en fonction.

Dans l'exemple de la figure 3, le dispositif de génération 38 comprend une unité de traitement d'informations 60 formée par exemple d'une mémoire 62 et d'un processeur 64 associé à la mémoire 62.

Dans l'exemple de la figure 3, le module d'identification 46, le module de détection 48, le module de génération 50 et le module de traitement 52 sont réalisés chacun sous forme d'un logiciel, ou d'une brique logicielle, exécutable par le processeur 64. La mémoire 62 est alors apte à stocker un logiciel d'identification, un logiciel de détection, un logiciel de génération, et un logiciel de traitement. Le processeur 64 est alors apte à exécuter chacun des logiciels.

En variante non représentée, le module d'identification 46, le module de détection 48, le module de génération 50 et le module de traitement 52 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*)*.*

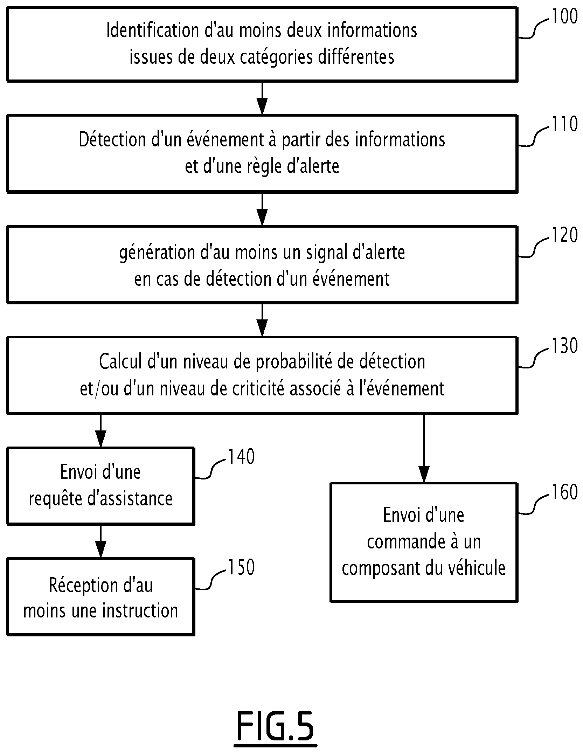

Le fonctionnement du dispositif électronique de génération 38 selon l'invention va désormais être expliqué à l'aide de la figure 5 représentant un organigramme du procédé, selon l'invention, de génération d'un signal d'alerte dans le véhicule 12, le procédé étant mis en œuvre par le dispositif électronique de génération 38.

Initialement, le véhicule 12 circule sur la voie de circulation 22 ou est à l'arrêt au niveau de l'une des stations d'arrêt 14.

Le procédé comprend une étape initiale 100 d'identification d'au moins deux informations issues de deux catégories différentes à partir d'au moins une image issue du capteur d'image(s) 36 embarqué à bord du véhicule 12.

Le procédé comprend ensuite une étape 110 de détection d'un évènement à partir de la combinaison desdites au moins deux informations de deux catégories différentes et à partir de la règle d'alerte associant lesdites au moins deux informations audit évènement.

Puis, lors d'une étape 120, le module de génération 50 génère au moins un signal d'alerte en cas de détection d'un évènement.

Lors d'une étape optionnelle 130, le module de génération 50 calcule le niveau de probabilité de détection de l'évènement et/ou le niveau de criticité prédéterminé associé à l'évènement.

Puis, le procédé comprend avantageusement une étape 140 d'envoi d'une requête d'assistance à la plateforme externe de supervision 16 du véhicule 12.

Puis, le procédé comprend une étape 150 de réception d'au moins une instruction envoyée par l'opérateur de la plateforme externe de supervision 16 après qu'il ait observé les images associées à l'évènement détecté.

En alternative ou en parallèle des étapes 140 et 150, le procédé comprend une étape 160 d'envoi, en fonction du signal d'alerte, d'une commande à un composant du véhicule 12 tel que décrit plus haut, ou encore à un organisme en charge du maintien de l'ordre.

Comme visible sur la figure 1, chaque station d'arrêt 14 est propre à recevoir des usagers 42 attendant l'un des véhicule 12.

En particulier, chaque station d'arrêt 14 est avantageusement une station d'autobus propre à recevoir des usagers 42 attendant un autobus.

Chaque station d'arrêt 14 est un aménagement placé par exemple sur un trottoir au bord de la voie de circulation 22.

La station d'arrêt 14 comprend par exemple un poteau et un dispositif d'information sur les horaires et le trajet dudit véhicule.

En complément ou en variante, comme représenté sur la figure 1, la station d'arrêt 14 comprend au moins une paroi formant un abri pour les usagers 42 contre les intempéries.

Avantageusement, la station d'arrêt 14 comprend en outre un deuxième capteur d'image(s) 136, un deuxième capteur additionnel 137, un deuxième écran d'affichage 143, un deuxième haut-parleur 144 et au moins un deuxième élément d'ameublement 156.

Le deuxième élément d'ameublement 156 est par exemple une deuxième place 134 telle qu'un siège ou un banc.

Dans un mode de réalisation avantageux, au moins l'une des stations d'arrêt 14 comprend un deuxième dispositif électronique 138 de génération d'un signal d'alerte.

Le deuxième dispositif électronique de génération 138 est semblable au dispositif de génération 38 décrit ci-dessus et seules les différences entre les deux dispositifs 38, 138 seront décrites par la suite.

En particulier, le deuxième dispositif de génération comprend un deuxième module d'identification 146, un deuxième module de détection 148, un deuxième module de génération 150 et un deuxième module de traitement 152.

Le deuxième module d'identification 146 est configuré pour identifier au moins deux informations de deux catégories différentes à partir d'au moins une image issue d'un capteur d'image(s) fixé à la station d'arrêt 14.

Chaque catégorie étant choisie parmi le groupe consistant en :
- une présence d'un objet interdit ou d'un animal dans la station d'arrêt 14 ;
- un mouvement ou une posture caractéristique de l'un des usagers 42 ; et
- une présence d'un élément d'ameublement de la station d'arrêt 14.

Le deuxième module de détection 148 est configuré pour détecter un évènement se déroulant dans de la station d'arrêt 14 à partir de la combinaison desdites au moins deux informations de deux catégories différentes et à partir d'une règle d'alerte associant lesdites au moins deux informations audit évènement.

En particulier, l'évènement détecté est une incivilité commise par un usager 42 de nature à gêner la tranquillité et/ou le confort des autres usagers 42 attendant le véhicule, ou encore de nature à dégrader la station d'arrêt 14.

A titre d'exemple, l'évènement détecté est choisi parmi le groupe consistant en :
- une dégradation de la station d'arrêt 14 commise par l'un des usagers 42 ;
- une atteinte à la propreté de la station d'arrêt 14 commise par l'un des usagers 42 ;
- une atteinte au confort sonore des usagers 42 ;
- un comportement menaçant physiquement et/ou verbalement par l'un des usagers 42 envers au moins l'un des autres usagers 42 ;
- une présence d'une arme dans la station d'arrêt 14;
- une présence d'un objet volumineux et encombrant dans la station d'arrêt 14 ;
- la présence d'un colis oublié et/ou piégé dans la station d'arrêt 14;
- une blessure de l'un des usagers 42 ; et
- le malaise et/ou la chute de l'un des usagers 42.

Le deuxième module de génération 150 est configuré pour générer au moins un signal d'alerte en cas de détection d'un évènement par le deuxième module de détection 148.

Le deuxième module de traitement 152 est configuré pour recevoir le signal d'alerte.

En fonction du signal d'alerte, le deuxième module de traitement 152 est en outre configuré pour envoyer une requête d'assistance à la plateforme externe de supervision 16 de la station d'arrêt 14.

La requête d'assistance comprend avantageusement les images associées à l'évènement afin que l'opérateur puissent les afficher sur l'écran d'affichage 20 de la plateforme externe 16 et prendre une décision.

En particulier, le deuxième module de traitement 152 est propre à recevoir de la part de la plateforme externe 16 de supervision de la station d'arrêt 14 une instruction choisie parmi le groupe consistant en :
- une instruction d'envoi du signal d'alerte à un organisme en charge du maintien de l'ordre ;
- une instruction d'envoi du signal d'alerte sous forme de signal sonore au deuxième haut-parleur 144 de la station d'arrêt 14 ; et
- une instruction d'envoi du signal d'alerte sous forme de signal visuel au deuxième écran d'affichage 143 de la station d'arrêt 14

En complément ou en variante, le deuxième module de traitement 152 est configuré pour envoyer en fonction du signal d'alerte une commande choisie parmi le groupe consistant en :
- une commande sonore au deuxième haut-parleur 143 de la station d'arrêt 14 ;
- une commande visuelle au deuxième écran d'affichage 144 de la station d'arrêt 14 ; et
- une commande d'envoi du signal d'alerte à un organisme en charge du maintien de l'ordre.

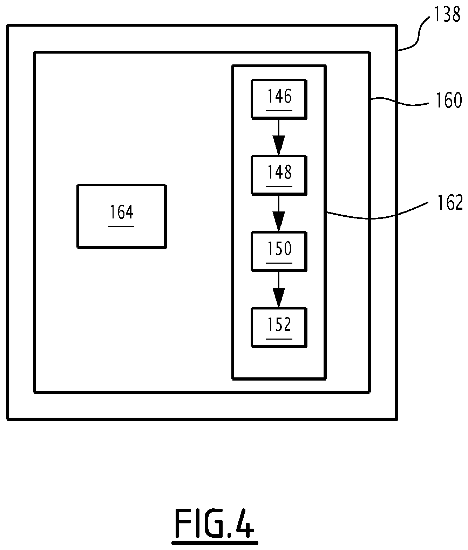

Dans l'exemple de la figure 4, le dispositif de génération 138 comprend une deuxième unité de traitement d'informations 160 formée par exemple d'une deuxième mémoire 162 et d'un deuxième processeur 164 associé à la deuxième mémoire 162.

Dans l'exemple de la figure 4, le deuxième module d'identification 146, le deuxième module de détection 148, le deuxième module de génération 150 et le deuxième module de traitement 152 sont réalisés chacun sous forme d'un logiciel, ou d'une brique logicielle, exécutables par le deuxième processeur 164. La deuxième mémoire 162 est alors apte à stocker un logiciel d'identification, un logiciel de détection, un logiciel de génération, et un logiciel de traitement. Le deuxième processeur 164 est alors apte à exécuter chacun des logiciels.

En variante non représentée, le deuxième module d'identification 146, le deuxième module de détection 148, le deuxième module de génération 150 et le deuxième module de traitement 152 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit).*

Le fonctionnement du deuxième dispositif électronique de génération 138 selon l'invention est semblable au fonctionnement du dispositif électronique de génération 38 décrit précédemment et ne sera pas décrit par la suite.

On conçoit alors que la présente invention présente un certain nombre d'avantages.

Le dispositif de génération 38 selon l'invention permet d'améliorer le traitement des évènements se déroulant dans les véhicules 12 et dans les stations d'arrêt 14 du système de transport 10.

En effet, la prise en compte des au moins deux informations et de la règle d'alerte permet une détection précise de l'évènement et donc une réaction plus pertinente.

En particulier, l'utilisation d'informations de deux catégories différentes permet d'obtenir une connaissance plus complète de ce qui se passe dans le véhicule 12 ou dans la station d'arrêt 14 et permet donc une détection plus précise des évènements.

En outre, le fait de croiser différents moyens de détection, comme par exemple une détection sur une image unique ou sur une succession d'images, ou encore via un capteur additionnel 37, permet d'augmenter encore cette précision.

De plus, l'envoi d'une commande directement à un composant du véhicule 12 ou de la station d'arrêt 14, tel que le haut-parleur 44, 144, permet une réaction très rapide et limite alors les conséquences pour les autres usagers 42.

L'envoi d'une requête d'assistance à la plateforme externe 16 permet en cas d'incertitude sur la véracité ou la gravité de l'évènement, de faire intervenir un opérateur qui peut agir au mieux en fonction des différentes informations issues des capteurs 36, 37, 136, 137, sans être présent dans le véhicule 12 ou dans la station d'arrêt 14.

L'invention permet donc d'améliorer significativement le confort pour les usagers 42 du système de transport 10, ainsi que leur sécurité, en permettant un traitement rapide et efficace évènements, en particulier des incivilités, se déroulant dans le véhicule 12 ou dans la station d'arrêt 14.

Tous ces avantages sont particulièrement intéressants lorsque le véhicule 12 est autonome, notamment un autobus autonome, car l'invention permet la détection et une réaction rapide en adéquation avec la réalité de la situation, même en l'absence de conducteur dans le véhicule 12.

## Revendications

1. Dispositif électronique de génération (38) d'un signal d'alerte, le dispositif (38) étant apte à être embarqué dans un véhicule (12), notamment un véhicule autonome, le véhicule (12) définissant un volume intérieur (40) configuré pour recevoir un ensemble d'usagers (42), le dispositif (38) comportant :
- un module d'identification (46) configuré pour identifier au moins deux informations de deux catégories différentes à partir d'au moins une image issue d'au moins un capteur d'image(s) (36) embarqué à bord du véhicule (12), chaque catégorie étant choisie parmi le groupe consistant en : une présence d'un animal ou d'un objet interdit et/ou abandonné par l'un des usagers (42) ; un mouvement ou une posture caractéristique de l'un des usagers (42) ; et une présence d'un élément d'ameublement (56) du véhicule (12) ;
- un module de détection (48) configuré pour détecter un évènement à partir de la combinaison desdites au moins deux informations de deux catégories différentes et à partir d'une règle d'alerte associant lesdites au moins deux informations audit évènement ;
- un module de génération (50) configuré pour générer au moins un signal d'alerte en cas de détection d'un évènement par le module de détection (48) ; et,
- un module de traitement (52) configuré pour recevoir le signal d'alerte et pour envoyer, en fonction du signal d'alerte, une requête d'assistance à une plateforme externe de supervision (16) du véhicule (12) ou une commande choisie parmi le groupe consistant en : une commande sonore à un haut-parleur (44) situé dans le volume intérieur (40) ou sur une paroi externe du véhicule (12) ; une commande visuelle à un écran d'affichage (43) situé dans le volume intérieur (40) ou sur une paroi externe véhicule (12) ; une commande d'arrêt d'urgence à un système de freinage embarqué dans le véhicule (12) ; une commande de verrouillage d'un porte (32) du véhicule (12) ; une commande de déplacement du véhicule (12) ; une commande de variation de vitesse du véhicule (12) et une commande d'envoi du signal d'alerte à un organisme en charge du maintien de l'ordre,
le module de traitement (52) étant configuré pour envoyer la commande ou la requête d'assistance en fonction d'un niveau de probabilité de détection de l'évènement calculé par le module de génération (50) du dispositif (38), le module de traitement étant configuré pour envoyer la requête d'assistance à la plateforme externe de supervision (16) lorsque le niveau de probabilité de détection de l'évènement est inférieur à une probabilité seuil, afin de permettre à un opérateur de confirmer la réalité de l'évènement avant de prendre une décision.

2. Dispositif (38) selon la revendication 1, dans lequel l'objet interdit est choisi parmi le groupe consistant en : une arme ; une cigarette en papier ; une cigarette électronique ; une pipe ; un briquet ; une enceinte portable ; un ciseau ; un cutter ; un feutre ; une bombe de peinture ; un vélo ; un aliment ; une poussette ; un colis et un bagage présentant une dimension maximale supérieure à un seuil prédéterminé.

3. Dispositif (38) selon la revendication 1 ou 2, dans lequel le mouvement ou la posture caractéristique de l'un des usagers (42) est choisi dans le groupe consistant en : une extension d'un bras de l'usager (42) pendant un intervalle de temps inférieur à une durée seuil prédéterminée ; un mouvement répété de la main de l'usager (42) vers la bouche dudit usager (42) ; un mouvement de la main de l'usager (42) vers un élément d'ameublement du véhicule (12) ; un mouvement de la main de l'usager (42) vers un autre usager (42) ; une position assise avec une jambe tendue de l'usager (42) ; et un poing fermé de l'usager (42).

4. Dispositif (38) selon l'une quelconque des revendications précédentes, dans lequel l'élément d'ameublement (56) du véhicule (12) est choisi dans le groupe consistant en : une porte (32) ; un siège ; une vitre ; un écran d'affichage (43) ; un haut-parleur (44) ; une caméra ; un diffuseur de climatisation ; une poignée ou une barre de maintien ; un valideur de ticket de transport ; un interphone ; une poignée de déverrouillage des portes (32) du véhicule (12) ; un bouton d'arrêt d'urgence ; un matériel de soins d'urgence ; un marquage au sol du véhicule (12) et un port USB informatique.

5. Dispositif (38) selon l'une quelconque des revendications précédentes, dans lequel, pour deux informations relatives à la présence d'un objet interdit et au mouvement de l'un des usagers (42), la règle d'alerte est propre à associer lesdites au moins deux informations pour la détection d'un évènement respectif si l'usager (42) est en possession de l'objet interdit et si le mouvement de l'usager (42) comporte un déplacement de l'objet interdit.

6. Dispositif (38) selon l'une quelconque des revendications précédentes, dans lequel, pour deux informations relatives à la présence d'un objet interdit ou d'un animal et à la présence d'un élément d'ameublement (56) du véhicule (12), la règle d'alerte est propre à associer lesdits au moins deux informations pour la détection d'un évènement respectif si l'objet interdit ou l'animal et l'élément d'ameublement (56) sont éloignés d'une distance inférieure à une distance seuil prédéterminée.

7. Dispositif (38) selon l'une quelconque des revendications précédentes, dans lequel, pour deux informations relatives au mouvement ou à la posture caractéristique de l'un des usagers (42) et la présence d'un élément d'ameublement (56) du véhicule (12), la règle d'alerte est propre à associer les au moins deux informations pour la détection d'un évènement respectif si l'usager (42) est en contact avec l'élément d'ameublement (56).

8. Dispositif (38) selon l'une quelconque des revendications précédentes, dans lequel le module de détection (48) est configuré pour détecter chaque évènement à partir d'au moins une unique image et en outre à partir d'au moins une suite d'images pendant une période temporelle prédéterminée correspondant à l'évènement.

9. Dispositif (38) selon l'une quelconque des revendications précédentes, dans lequel le module de traitement (52) est configuré pour envoyer la commande ou la requête d'assistance en fonction d'un niveau de criticité prédéterminé associé à l'évènement attribué par le dispositif (38).

10. Système de transport (10) comprenant :
- un ensemble de véhicules (12), au moins un véhicule (12) étant un véhicule comprenant un premier dispositif électronique de génération (38) d'un signal d'alerte, le premier dispositif (38) étant selon l'une quelconque des revendications précédentes et au moins un capteur d'image(s) (36) relié au dispositif électronique de génération (38) ;
- un ensemble de stations d'arrêt (14), chaque station d'arrêt (14) étant propre à recevoir des usagers (42) attendant l'un des véhicules (12) ;
- une plateforme externe de supervision (16) configurée pour surveiller ledit ensemble de véhicules (12) et ledit ensemble de stations d'arrêt (14) ;
au moins l'une des stations d'arrêt (14) comprenant un deuxième dispositif électronique de génération (138) d'un signal d'alerte, le deuxième dispositif (138) comprenant :
+ un deuxième module d'identification (146) configuré pour identifier au moins deux informations de deux catégories différentes à partir d'au moins une image issue d'un deuxième capteur d'image(s) (136) fixé à la station d'arrêt (14), chaque catégorie étant choisie parmi le groupe consistant en : une présence d'un objet interdit ou d'un animal dans la station d'arrêt (14) ; un mouvement ou une posture caractéristique de l'un des usagers (42) ; et une présence d'un deuxième élément d'ameublement (156) de la station d'arrêt (14) ;
+ un deuxième module de détection (148) configuré pour détecter un évènement se déroulant au niveau de la station d'arrêt (14) à partir de la combinaison desdites au moins deux informations de deux catégories différentes et à partir d'une règle d'alerte associant lesdites au moins deux informations audit évènement ; et
+ un deuxième module de génération (150) configuré pour générer au moins un signal d'alerte en cas de détection d'un évènement par le deuxième module de détection (148).

11. Procédé de génération d'un signal d'alerte dans un véhicule (12), notamment un véhicule autonome, le véhicule (12) comprenant un volume intérieur (40) configuré pour recevoir un ensemble d'usagers (42), le procédé étant mis en œuvre par un dispositif électronique de génération (38) selon l'une quelconque des revendications 1 à 9 et comportant les étapes suivantes :
- identification (100) d'au moins deux informations de deux catégories différentes à partir d'au moins une image issue d'un capteur d'image(s) (36) embarqué à bord du véhicule (12), chaque catégorie étant choisie parmi le groupe consistant en : une présence d'un objet interdit ou d'un animal ; un mouvement ou une posture caractéristique de l'un des usagers (42) ; et une présence d'un élément d'ameublement (56) du véhicule (12) ;
- détection (110) d'un évènement à partir de la combinaison desdites au moins deux informations de deux catégories différentes et à partir d'une règle d'alerte associant lesdites au moins deux informations audit évènement ; et
- génération (120) d'au moins un signal d'alerte en cas de détection d'un évènement.

12. Programme d'ordinateur comportant des instructions logicielles qui, lorsqu'elles sont exécutées par un dispositif électronique de génération (38) selon l'une quelconque des revendications 1 à 9, mettent en œuvre un procédé de génération selon la revendication précédente.

## Patentansprüche

1. Elektronische Erzeugungsvorrichtung (38) eines Warnsignals, wobei die Vorrichtung (38) geeignet ist, um an Bord eines Fahrzeugs (12), insbesondere eines autonomen Fahrzeugs, zu sein, wobei das Fahrzeug (12) ein Innenvolumen (40) definiert, das konfiguriert ist, um eine Gruppe von Benutzern (42) aufzunehmen, die Vorrichtung (38) umfassend:
- ein Identifizierungsmodul (46), das konfiguriert ist, um mindestens zwei Informationen von zwei verschiedenen Kategorien aus mindestens einem Bild von mindestens einem Bildsensor (36) an Bord des Fahrzeugs (12) zu identifizieren, wobei jede Kategorie ausgewählt ist aus der Gruppe, bestehend aus: einer Anwesenheit eines Tieres oder eines verbotenen und/oder von einem der Benutzer (42) zurückgelassenen Objekts; einer Bewegung oder einer charakteristischen Haltung eines der Benutzer (42); und einer Anwesenheit eines Einrichtungsgegenstands (56) des Fahrzeugs (12);
- ein Erkennungsmodul (48), das konfiguriert ist, um ein Ereignis aus der Kombination der mindestens zwei Informationen aus zwei verschiedenen Kategorien und aus einer Alarmregel, die die mindestens zwei Informationen mit dem Ereignis verbindet, zu erkennen;
- ein Erzeugungsmodul (50), das konfiguriert ist, um mindestens ein Warnsignal zu erzeugen, wenn ein Ereignis durch das Erkennungsmodul (48) erkannt wird; und
- ein Verarbeitungsmodul (52), das konfiguriert ist, um das Warnsignal zu empfangen und abhängig von dem Warnsignal eine Unterstützungsanforderung an eine externe Überwachungsplattform (16) des Fahrzeugs (12) oder einen Befehl zu senden, der ausgewählt ist aus der Gruppe, bestehend aus: einem akustischen Befehl an einen Lautsprecher (44), der sich im Innenraum (40) oder an einer Außenwand des Fahrzeugs (12) befindet; einem visuellen Befehl an einen Anzeigeschirm (43), der sich im Innenraum (40) oder an einer Außenwand des Fahrzeugs (12) befindet; einem Nothaltbefehl an ein Bremssystem an Bord des Fahrzeugs (12); einen Befehl zum Verriegeln einer Tür (32) des Fahrzeugs (12); einen Befehl zum Bewegen des Fahrzeugs (12); einen Befehl zum Ändern der Geschwindigkeit des Fahrzeugs (12) und einen Befehl zum Senden des Alarmsignals an eine mit der Aufrechterhaltung der Ordnung beauftragte Stelle,
wobei das Verarbeitungsmodul (52) konfiguriert ist, um den Befehl oder die Unterstützungsanforderung abhängig von einem Wahrscheinlichkeitsniveau der Erkennung des Ereignisses zu senden, das von dem Erzeugungsmodul (50) der Vorrichtung (38) berechnet wird, wobei das Verarbeitungsmodul konfiguriert ist, um die Unterstützungsanforderung an die externe Überwachungsplattform (16) zu senden, wenn das Wahrscheinlichkeitsniveau der Erkennung des Ereignisses unter einer Schwellenwahrscheinlichkeit ist, um es einem Bediener zu ermöglichen, die Realität des Ereignisses zu bestätigen, bevor eine Entscheidung getroffen wird.

2. Vorrichtung (38) nach Anspruch 1, wobei der verbotene Gegenstand ausgewählt ist aus der Gruppe, bestehend aus: einer Waffe; einer Papierzigarette; einer elektronischen Zigarette; einer Pfeife; einem Feuerzeug; einem tragbaren Lautsprecher; einer Schere; einem Cutter; einem Filzstift; einer Sprühdose; einem Fahrrad; einem Lebensmittel; einem Kinderwagen; einem Paket und einem Gepäckstück, das eine maximale Abmessung aufweist, die einen vorbestimmten Schwellenwert überschreitet.

3. Vorrichtung (38) nach Anspruch 1 oder 2, wobei die charakteristische Bewegung oder Haltung eines der Benutzer (42) ausgewählt ist aus der Gruppe, bestehend aus: einem Ausstrecken eines Arms des Benutzers (42) über ein Zeitintervall, das kleiner ist als eine vorbestimmte Schwellenwertdauer; einer wiederholten Bewegung der Hand des Benutzers (42) zu dem Mund des Benutzers (42); einer Bewegung der Hand des Benutzers (42) in Richtung eines Einrichtungsgegenstands des Fahrzeugs (12); einer Bewegung der Hand des Benutzers (42) in Richtung eines anderen Benutzers (42); einer Sitzposition mit einem ausgestreckten Bein des Benutzers (42); und einer geschlossenen Faust des Benutzers (42).

4. Vorrichtung (38) nach einem der vorherigen Ansprüche, wobei das Einrichtungsteil (56) des Fahrzeugs (12) ausgewählt ist aus der Gruppe, bestehend aus: einer Tür (32); einem Sitz; einem Fenster; einem Anzeigebildschirm (43); einem Lautsprecher (44); einer Kamera; einem Klimaanlagendiffusor; einem Haltegriff oder einer Haltestange; einem Fahrkartenentwerter; einer Gegensprechanlage; einem Griff zum Entriegeln der Türen (32) des Fahrzeugs (12); einem Not-Aus-Taster; einem Notversorgungsmaterial; einer Bodenmarkierung des Fahrzeugs (12) und einem USB-Computeranschluss.

5. Vorrichtung (38) nach einem der vorherigen Ansprüche, wobei für zwei Informationen über das Vorhandensein eines verbotenen Objekts und die Bewegung eines der Benutzer (42) die Alarmregel geeignet ist, um die mindestens zwei Informationen für die Erkennung eines jeweiligen Ereignisses zu assoziieren, wenn der Benutzer (42) im Besitz des verbotenen Objekts ist und wenn die Bewegung des Benutzers (42) eine Verschiebung des verbotenen Objekts umfasst.

6. Vorrichtung (38) nach einem der vorherigen Ansprüche, wobei für zwei Informationen bezüglich der Anwesenheit eines verbotenen Objekts oder eines Tiers und der Anwesenheit eines Einrichtungsgegenstands (56) des Fahrzeugs (12) die Alarmregel geeignet ist, um die mindestens zwei Informationen für die Erkennung eines jeweiligen Ereignisses zu assoziieren, wenn das verbotene Objekt oder das Tier und der Einrichtungsgegenstand (56) um einen Abstand entfernt sind, der kleiner ist als ein vorbestimmter Schwellenwertabstand.

7. Vorrichtung (38) nach einem der vorherigen Ansprüche, wobei die Alarmregel für zwei Informationen bezüglich der charakteristischen Bewegung oder Haltung eines der Benutzer (42) und der Anwesenheit eines Einrichtungsgegenstands (56) des Fahrzeugs (12) geeignet ist, um die mindestens zwei Informationen für die Erkennung eines jeweiligen Ereignisses zu assoziieren, wenn der Benutzer (42) mit dem Einrichtungsgegenstand (56) in Kontakt ist.

8. Vorrichtung (38) nach einem der vorherigen Ansprüche, wobei das Erkennungsmodul (48) konfiguriert ist, um jedes Ereignis aus mindestens einem einzelnen Bild und zusätzlich aus mindestens einer Abfolge von Bildern während einer vorbestimmten Zeitperiode, die dem Ereignis entspricht, zu erkennen.

9. Vorrichtung (38) nach einem der vorherigen Ansprüche, wobei das Verarbeitungsmodul (52) konfiguriert ist, um den Befehl oder die Anfrage zur Unterstützung abhängig von einem vorbestimmten Kritikalitätsniveau zu senden, das mit dem von der Vorrichtung (38) zugewiesenen Ereignis assoziiert ist.

10. Transportsystem (10), umfassend:
- eine Gruppe von Fahrzeugen (12), wobei mindestens ein Fahrzeug (12) ein Fahrzeug ist, umfassend eine erste elektronische Vorrichtung (38) zur Erzeugung eines Warnsignals, wobei die erste Vorrichtung (38) gemäß einem der vorherigen Ansprüche ist, und mindestens einen Bildsensor(en) (36), der mit der elektronischen Erzeugungsvorrichtung (38) verbunden ist;
- einen Satz von Haltestellen (14), wobei jede Haltestelle (14) geeignet ist, um Benutzer (42) aufzunehmen, die auf eines der Fahrzeuge (12) warten;
- eine externe Überwachungsplattform (16), die konfiguriert ist, um den Satz von Fahrzeugen (12) und den Satz von Haltestellen (14) zu überwachen;
wobei mindestens eine der Haltestellen (14) eine zweite elektronische Vorrichtung (138) zur Erzeugung eines Warnsignals umfasst, die zweite Vorrichtung (138) umfassend:
+ ein zweites Identifizierungsmodul (146), das konfiguriert ist, um mindestens zwei Informationen aus zwei verschiedenen Kategorien aus mindestens einem Bild zu identifizieren, das von einem an der Haltestelle (14) befestigten zweiten Bildsensor(en) (136) stammt, wobei jede Kategorie ausgewählt ist aus der Gruppe, bestehend aus: einem Vorhandensein eines verbotenen Objekts oder eines Tiers in der Haltestelle (14); einer charakteristischen Bewegung oder Haltung eines der Benutzer (42); und einem Vorhandensein eines zweiten Einrichtungsgegenstands (156) der Haltestelle (14);
+ ein zweites Erkennungsmodul (148), das konfiguriert ist, um ein Ereignis, das an der Haltestelle (14) stattfindet, aus der Kombination der mindestens zwei Informationen aus zwei verschiedenen Kategorien und aus einer Alarmregel, die die mindestens zwei Informationen mit dem Ereignis verbindet, zu erkennen; und
+ ein zweites Erzeugungsmodul (150), das konfiguriert ist, um mindestens ein Warnsignal zu erzeugen, wenn ein Ereignis durch das zweite Erkennungsmodul (148) erkannt wird.

11. Verfahren zum Erzeugen eines Warnsignals in einem Fahrzeug (12), insbesondere einem autonomen Fahrzeug, wobei das Fahrzeug (12) einen Innenraum (40) umfasst, der konfiguriert ist, um eine Gruppe von Benutzern (42) aufzunehmen, wobei das Verfahren von einer elektronischen Erzeugungsvorrichtung (38) nach einem der Ansprüche 1 bis 9 durchgeführt wird und die folgenden Schritte umfasst:
- Identifizieren (100) von mindestens zwei Informationen aus zwei verschiedenen Kategorien aus mindestens einem Bild von einem Bildsensor (36) an Bord des Fahrzeugs (12), wobei jede Kategorie ausgewählt ist aus der Gruppe, bestehend aus: einer Anwesenheit eines verbotenen Objekts oder eines Tiers; einer charakteristischen Bewegung oder Haltung eines der Benutzer (42); und einer Anwesenheit eines Einrichtungsgegenstands (56) des Fahrzeugs (12);
- Erkennen (110) eines Ereignisses aus der Kombination der mindestens zwei Informationen aus zwei verschiedenen Kategorien und aus einer Alarmregel, die die mindestens zwei Informationen mit dem Ereignis assoziiert; und
- Erzeugung (120) mindestens eines Warnsignals, wenn ein Ereignis erkannt wird.

12. Computerprogramm, umfassend Softwareanweisungen, die, wenn sie von einer elektronischen Erzeugungsvorrichtung (38) nach einem der Ansprüche 1 bis 9 ausgeführt werden, ein Erzeugungsverfahren nach dem vorherigen Anspruch implementieren.

## Claims

1. Electronic device (38) for generating an alert signal, the device (38) being able to be carried on board a vehicle (12), in particular an autonomous vehicle, the vehicle (12) defining an interior space (40) designed to receive a set of passengers (42), the device (38) comprising:
- an identification module (46) designed to identify at least two items of information from two different categories from at least one image from at least one image sensor (36) on board the vehicle (12), each category being chosen from the group consisting of: the presence of an animal or an object that is prohibited and/or abandoned by one of the passengers (42); a characteristic movement or posture of one of the passengers (42); and the presence of a furnishing element (56) of the vehicle (12);
- a detection module (48) designed to detect an incident from the combination of said at least two items of information from two different categories and from a warning rule associating said at least two items of information with said incident; and
- a generation module (50) designed to generate at least one warning signal upon detection of an incident by the detection module (48); et,
- a processing module (52) designed to receive the warning signal and to send, depending on the warning signal, a request for assistance to an external platform (16) monitoring the vehicle (12) or a command chosen from the group consisting of: a sound command to a speaker (44) located in the interior space (40) or on an external wall of the vehicle (12); a visual command on a display screen (43) located in the interior space (40) or on an external vehicle wall (12); an emergency stop command to an on-board braking system (12); a door locking command (32) of the vehicle (12); a command for moving the vehicle (12); a vehicle speed variation command (12) and a command to send an alert signal to an organization in charge of maintaining order,
the processing module (52) being designed to send the command or the request for assistance as a function of a level of probability of detection of the incident calculated by the generation module of the device (38), the processing module being designed to send the request for assistance to the external monitoring platform (16) when the level of probability of detection of the incident is less than a predefined threshold, in order to allow the operator to confirm the reality of the incident before making a decision.

2. Device (38) according to claim 1, wherein the prohibited object is selected from the group consisting of: a weapon; a paper cigarette; an electronic cigarette; a pipe; a lighter; a portable speaker; a pair of scissors; a cutter; a felt-tip pen; a paint spray; a bike; food; a stroller; a package or luggage having a maximum dimension greater than a predetermined threshold.

3. Device (38) according to claim 1 or 2, wherein the characteristic movement or posture of one of the passengers (42) is selected from the group consisting of: an extension of an arm of the passenger (42) during a time interval less than a predetermined threshold duration; repeated movement of the passenger's hand (42) towards the mouth of said passenger (42); movement of the passenger's hand (42) towards a vehicle furnishing element (12); movement of the passenger's hand (42) towards another passenger (42); a seated position with the passenger's leg extended (42); or a closed fist of the passenger (42).

4. Device (38) according to any one of the preceding claims, wherein the furnishing element (56) of the vehicle (12) is selected from among the group consisting of: a door (32); a seat; a window; a display screen (43); a speaker (44); a camera; an air conditioning diffuser; a handle or a grab bar; a transport ticket validator; an intercom; a handle for unlocking the doors (32) of the vehicle (12); an emergency stop button; first-aid equipment; a vehicle floor marking (12), or a computer USB port.

5. Device (38) according to any one of the preceding claims, wherein, for two items of information relating to the presence of a prohibited object and the movement of one of the passengers (42), the warning rule is specific in associating said at least two items of information for the detection of a respective incident if the passenger (42) is in possession of the prohibited object and if the movement of the passenger (42) involves the displacement of the prohibited object.

6. Device (38) according to any one of the preceding claims, wherein, for two items of information relating to the presence of a prohibited object or an animal and the presence of a furnishing element (56) of the vehicle (12), the warning rule is suitable for associating said at least two items of information for the detection of a respective incident if the prohibited object or the animal and the furnishing element (56) are at a distance less than a predetermined threshold distance.

7. Device (38) according to any one of the preceding claims, wherein, for two items of information relating to the characteristic movement or the posture of one of the passengers (42) and the presence of a furnishing element (56) of the vehicle (12), the warning rule is suitable for associating the at least two items of information for the detection of a respective incident if the passenger (42) is in contact with the furnishing element (56).

8. Device (38) according to any one of the preceding claims, wherein the detection module (48) is designed to detect each incident from at least one single image and, further, from at least one series of images during a predetermined period of time corresponding to the incident.

9. Device (38) according to any preceding claim, wherein the processing module (52) is designed to send the command or the request for assistance as a function of a predetermined criticality level associated with the incident assigned by the device (38).

10. Transport system (10) comprising:
- a set of vehicles (12), at least one vehicle (12) being a vehicle comprising a first electronic device (38) for generating an alert signal, the first device (38) being according to any one of the preceding claims and at least one image sensor (36) connected to the electronic generation device (38);
- a set of bus stops (14), each bus stop (14) being suitable for receiving passengers (42) waiting for one of the vehicles (12);
- an external monitoring platform (16) designed to monitor said set of vehicles (12) and said set of bus stops (14);
at least one of the bus stops (14) comprising a second electronic device (138) for generating an alert signal, the second device (138) comprising:
+ a second identification module (146) designed to identify at least two items of information from two different categories from at least one image from a second image sensor (136) attached to the bus stop (14), each category being selected from the group consisting of: the presence of a prohibited object or animal at the bus stop (14); a characteristic movement or posture of one of the passengers (42); and the presence of a second furnishing element (156) at the bus stop (14);
+ a second detection module (148) designed to detect an incident taking place at the bus stop (14) from the combination of said at least two items of information from two different categories and from warning a rule associating said at least two items of information with said incident; and
+ a second generation module (150) designed to generate at least one warning signal in the event of detection of an incident by the second detection module (148).

11. A method of generating an alert signal in a vehicle (12), in particular an autonomous vehicle, the vehicle (12) comprising an interior space (40) designed to receive a set of passengers (42), the method being implemented by an electronic generation device (38) according to any one of claims 1 to 9, and comprising the following steps:
- identification (100) of at least two items of information from two different categories from at least one image from an image sensor (36) on board the vehicle (12), each category being chosen from the group consisting of: the presence of a prohibited object or an animal; a characteristic movement or posture of one of the passengers (42); and the presence of a furnishing element (56) of the vehicle (12);
- detection (110) of an incident from the combination of said at least two items of information from two different categories and from a warning rule associating said at least two items of information with said incident; and
- generation (120) of at least one warning signal in the event of detection of an incident.

12. A computer program comprising software instructions which, when executed by an electronic generation device (38) according to any one of claims 1 to 9, implement a generation method according to the preceding claim.
